# EUROPEAN PATENT APPLICATION

(11) **EP 0 905 402 A2**
(43) Date of publication of application: **31.03.1999**
(21) Application number: 98307875.9
(22) Date of filing: 29.09.1998
(51) Int. Cl.: F16D 59/02, F16D 55/28

(54) **Electromagnetically and mechanically actuated brake**

(30) Priority: 30.09.1997 GB 9720765
(71) Applicant: Dana Spicer Europe Ltd, Bishop Auckland, County Durham DL 19 9AA (GB)
(72) Inventor: Pitto, Bruno, Angers (FR); Wrigth, Neil Gary, Co. Durham DL14 9AA (GB)
(74) Representative: Gibbs, Christopher Stephen

(57) **Abstract**

A brake unit is described which has both electromagnetic and mechanical braking systems arranged to brake the same rotor 1. Both systems act on the same brake member 5. In embodiments, the mechanical braking system has a linkage comprising a lever 37, a cup 35, and a spring 31 acting on the brake member 5. The electromagnetic system can include a movable actuator 21 urged against the brake member 5 by springs 31. The electromagentic brake can be released by actuating electromagnetic coils 29.

## Description

The invention relates to a brake unit, particularly a brake unit for providing a braking action with the removal of electric power or alternatively by operation of a brake control.

Electromagnetic braking systems are known in which a moving rotor is located between two plates. The plates are biased together by a spring so that they frictionally engage the rotor and hence brake it. An electromagnetic coil is provided that can be energised to separate the plates by magnetically pulling one of the plates against the action of the spring to release the brake.

Electric vehicles such as floor sweepers, milk floats, mobility scooters or other medical aids generally require both a security brake which operates when electric power fails or when the vehicle is parked as well as a mechanical brake for controlled braking, in particular for slowing down or stopping the vehicle during travel. However, the provision of two braking systems increases both the overall cost of the system and its mass.

According to the invention there is provided a brake unit comprising a rotor, a brake member, a mechanical braking system including a mechanical linkage actuatable to urge the brake member towards the rotor to brake the rotor, and an electromagnetic braking system including a movable actuator, characterised in that the movable actuator is biased to act against the same brake member used in the mechanical braking system to urge the brake member towards the rotor to brake the rotor, and the electromagnetic braking system includes an electromagnetic coil arranged so that it can be energised to move the movable actuator against the action of the bias away from the brake member.

When the electromagnetic coil is de-energised, the movable actuator is moved by the biasing against the brake member to cause braking. The brake unit is thus adapted to move the brake member towards the plate to brake the rotor when the mechanical linkage is actuated or when the electromagnetic coil is de-energised, both mechanical and electromagnetic braking systems operating independently.

Such a brake unit combines the mechanical and electromagnetic braking systems in one unit, using the same brake member. This eliminates the need for two separate braking systems and the expense that would cause. Even if the electromagnetic coil pulls the movable actuator away from the brake member with a significant force, the mechanical braking system is largely unaffected and the brake member can still be urged towards the rotor to brake the rotor without having to overcome the significant force. Thus, the provision of the movable actuator allows the two braking systems to act independently, i.e. in parallel.

The rotor is preferably sandwiched between the brake member and an end plate. The brake member can be a steel disc. In embodiments, friction means such as brake pads or a friction material may be provided, preferably on the outside of the rotor but alternatively on the brake member and end plate. The rotor may be connected via a hub to an axle stub or shaft. The hub may be bored and keyed to the shaft or internally splined to engage the shaft.

Preferably, the bias is provided by a bias spring, for example by a helical spring or springs acting in compression to bias the movable actuator towards the brake member. The electromagnetic coil is preferably arranged to attract the movable actuator when the coil is energised, whereby the movable actuator is pulled towards the coil, compressing the spring.

Preferably, a balance spring or springs is or are provided to move the brake member away from the rotor to release the brake when the coil is energised and the mechanical braking system is not actuated. In this way, the brake can be reliably released. Preferably, a plurality of small helical springs are provided arranged between the brake member and the end plate spaced circumferentially outside the rotor. The balance springs can each be located around solid spacers. The spring constant of the balance spring or springs should be weaker than that of the bias spring so that when the coil is de-energised the bias spring urges the brake member against the rotor to brake the rotor. The balance springs keep the brake member away from the rotor when the brakes are not applied, and so substantially reduce wear, drag and heat caused by friction between the brake member and the rotor.

Preferably, a user-operable control is provided in communication with the linkage of the mechanical braking system so that a user can actuate the user-operable control to apply braking. This can be used in particular for slowing down or stopping the vehicle during travel. In embodiments, the user-operable control is a foot pedal.

The linkage of the mechanical braking system preferably includes an actuation member acting on the brake member via a second spring means. The actuation member can preferably be moved towards the brake member to compress the second spring to urge the brake member against the rotor and hence provide a braking action, particularly for providing a controlled braking system for slowing down and stopping a moving vehicle. Preferably there is further provided a lever, one end of which is connected to the actuation member and the other end of which is connected via a cable to a user-operable control. In this way, the pressure of the user on the user-operable control determines how much the second spring means is compressed and therefore with what force the brake member is pressed towards the plate. Thereby, user-controlled braking can be achieved. The cable connecting the lever to the user-operable control may be, for example, a Bowden cable.

Preferably, the mechanical and electromagnetic braking systems are arranged concentrically to save space. In embodiments, the second spring means is a helical spring arranged around the hub. An annular shell is provided concentrically around the second spring means with the electromagnetic coil arranged within the shell. The first spring means is preferably a plurality of small springs arranged with one end located within the shell and the other end extending axially out of the shell to engage the movable actuator.

Preferably, the movable actuator is arranged concentrically around the second spring means. The second spring means thus passes through the movable actuator so that the brake member can be acted on independently both by the second spring means and the movable actuator to provide braking either when the mechanical system is actuated or the coil is de-energised.

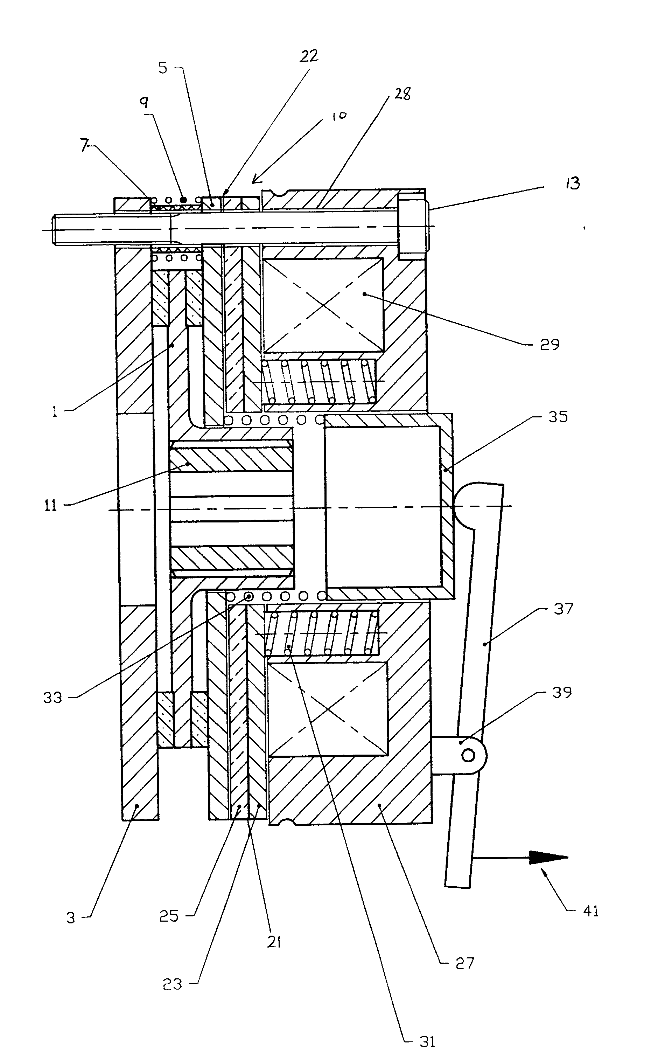

For a better understanding of the invention, a specific embodiment will now be described, purely by way of example, with reference to the accompanying drawing which shows a cross-section of a brake unit according to the invention.

Referring to the Figure, which is not drawn to scale, a rotor 1 is located between a fixed end plate 3 and a floating steel brake member 5. The brake member 5 is capable of axial movement towards the rotor 1 to brake it or away from the rotor 1 to release the brake.

A fixed annular steel shell 27 is provided defining a gap 10 between the fixed steel shell 27 and the floating brake member 5. A plurality of screws 13 pass axially through screw holes 28 in the annular shell 27 and the end plate 3 to fix the annular shell to 27 the end plate 3. The screw holes 28 in the present embodiment are arranged around the outer circumference of the annular shell 27.

Solid spacers 7 with a smooth outer surface are provided between the brake member 5 and the plate 3 around the screws 13. Balance springs 9 are provided around some or all of the spacers 7, which act as guides for the balance springs. The balance springs are arranged in compression between brake member 5 and plate 3 to urge them apart. The rotor 1 is provided with a bored hub 11 to which a shaft may be keyed.

The electromagnetic braking system will now be described. A movable actuator 21 is arranged in the gap 10, and is free to move axially. The movable actuator 21 nearly fills the gap 10, but leaves an airgap 22 which has a width of approximately 0.5mm. This is thus also the distance of free axial travel of the movable actuator. The movable actuator 21 is in annular form, and is provided with holes to allow the screws 13 to pass through it.

In the present embodiment, the movable actuator comprises a non-metallic sheet 25 bonded to a ferromagnetic sheet 23, the latter located on the side facing away from the brake member. The ferromagnetic sheet may conveniently be made of steel. The nonmagnetic sheet preferably is made of a material of low magnetic permeability, here aluminium. A polymer or ceramic would also be suitable. The idea is to break the magnetic circuit between the ferromagnetic sheet 23 and the brake member 5, and hence to reduce the force to be overcome to apply the brake using the mechanical braking system. Also, the decay time of the magnetic field is reduced, speeding up the operation of the brake.

An electromagnetic coil 29 connected to an electrical activation circuit (not shown) is provided within the steel shell 27. A first spring means, in the present embodiment a plurality of helical springs 31, are arranged in a corresponding plurality of bores 28 arranged around the inner circumference of the annular shell 27. One end of each helical spring 31 is located in a corresponding bore 28, and the other end extends out of the shell 27. The helical springs 31 are arranged in compression between the shell and the movable actuator 21 to bias it towards the brake member. The combined spring constant of the balance springs 9 is arranged to be weaker than that of the first helical spring 31 so that when the coil is not energised the helical spring 31 urges the movable actuator 21 against the brake member 5 with sufficient force to compress the balance springs 9. The brake member 5 is thereby biased against the rotor 1 to provide a braking action when the coil is not energised.

Turning to the mechanical braking system, a second spring means is located concentrically outside the hub 11. The second spring means, in this instance a central helical spring 33, is arranged axially in compression between the brake member 5 and an actuation member, in this case an actuation cup 35. The central helical spring 33 passes concentrically through the centre of the annular shell 27 and the centre of the movable actuator 21. The actuation cup 21 is likewise arranged within the centre of the annular shell 27. The actuation cup 35 is in contact with a lever 37 having a fulcrum 39 mounted on the annular shell 27.

The other end of the lever 37 from the actuation cup 35 is connected to a Bowden cable 41 and by means of the Bowden cable 41 to a foot pedal (not shown). In alternative embodiments the Bowden cable could be replaced by a hydraulic linkage, for instance.

The brake unit may be used in a vehicle or other apparatus. In the resting state with no power supplied the coil is de-energised. The helical springs 31 urge the movable actuator 21 against the brake member 5, compressing the balance spring 9. The brake member 5 acts against the rotor 1 to provide a stationary or parking brake.

To use the vehicle or apparatus, the coil is electrically energised to magnetically attract the ferromagnetic part 23 of the movable actuator 21. The strength of the magnetic attractive force is such that it overcomes the biasing action of the helical spring 31, and pulls the movable actuator against the steel shell. This releases the stationary or parking braking action, as the balance spring 9 separates the brake member from the plate.

Whilst operating the vehicle or other apparatus in which the brake unit is mounted, the user can apply a pressure to the foot pedal which is transmitted by the Bowden cable 41 and the lever 47 to the actuation cup 35. The actuation cup compresses the central helical spring 33 which causes the brake member 5 to be urged against the action of the balance spring 9 towards the end plate 3. This brakes the rotor. Because of the mechanical nature of the linkage, the user can apply a variable pressure on the foot pedal 43 which will compress the central helical spring 33 by a variable amount, providing a variable and controllable braking action. Because the central helical spring 33 passes through the centre of the annular shell 27 and the movable actuator 21, the mechanical braking action can be operated independently of the electromagnetic braking action.

If the electrical power to the coil 29 fails or is deliberately switched off, the movable actuator 21 will be urged by the first helical springs 31 against the brake member 5 to cause braking. The brake is thus applied in the same way as when the braking member is actuated mechanically, although the force with which the brake member is urged against the rotor may well be' different.

This brake unit is primarily designed for use on electric vehicles such as floor sweepers, milk floats, mobility scooters and other medical aids but can be applied anywhere where a security brake is required as well as a mechanical brake. Such a brake is particularly suitable in any dry environment.

## Claims

1. A brake unit comprising
a rotor (1),
a brake member (5),
a mechanical braking system including a mechanical linkage (37,35,33) actuatable to urge the brake member (5) towards the rotor (1) to brake the rotor (1), and
an electromagnetic braking system including a movable actuator (21), characterised in that
the movable actuator (21) is biased to act against the same brake member (5) used in the mechanical braking system to urge the brake member (5) towards the rotor (1) to brake the rotor (1), and
the electromagnetic braking system includes an electromagnetic coil (29) arranged so that it can be energised to move the movable actuator (21) against the action of the bias away from the brake member (5).

2. A brake unit according to claim 1 or 2 wherein the bias is provided by a bias spring or bias springs (31) acting in compression to bias the movable actuator (21) towards the brake member (5).

3. A brake unit according to claim 1 wherein the rotor (1) is sandwiched between the brake member (5) and an end plate (3).

4. A brake unit according to claim 3 further comprising a balance spring or springs (9) tending to move the brake member (5) away from the rotor for releasing the brake when the coil (29) is energised and the mechanical braking system is not actuated.

5. A brake unit according to claim 4 in which a plurality of small helical springs (9) are provided as the balance springs, the small helical springs being arranged between the brake member (5) and the end plate (3) and spaced circumferentially around the end plate (3) radially outside the rotor (1).

6. A brake unit according to any preceding claim further comprising a user-operable control in communication with the linkage (33,35,37) of the mechanical braking system so that a user can actuate the user-operable control to apply braking.

7. A brake unit according to any preceding claim wherein the mechanical and electromagnetic braking systems are arranged concentrically.

8. A brake unit according to any preceding claim wherein the linkage of the mechanical braking system includes an actuation member (35) acting on the brake member (5) via a second spring means (33).

9. A brake unit according to claim 8 in which
the rotor (1) has a hub (11) extending axially from the centre of the rotor,
the second spring means is a helical spring (33) arranged around the hub (11),
an annular shell (27) is provided concentrically around the second spring means (33) and
the electromagnetic coil (29) is arranged within the shell (27).

10. A brake unit according to claim 9 in which the movable actuator (21) is arranged concentrically around the second spring means (33).
